Europäisches Patentamt

European Patent Office

Office européen des brevets

(11) Veröffentlichungsnummer: **0 392 599**

**A2**

(12) **EUROPÄISCHE PATENTANMELDUNG**

(21) Anmeldenummer: **90200818.4**

(22) Anmeldetag: **05.04.90**

(51) Int. Cl.⁵: **C03B 37/014, C03C 17/04, C03B 19/06**

(30) Priorität: **11.04.89 DE 3911745**

(43) Veröffentlichungstag der Anmeldung:
**17.10.90 Patentblatt 90/42**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Clasen, Rolf, Dr. Dipl.-Phys.**
**Schlossparkstrasse 36**
**D-5100 Aachen(DE)**

(74) Vertreter: **Nehmzow-David, Fritzi-Maria et al**
**Philips Patentverwaltung GmbH**
**Wendenstrasse 35 Postfach 10 51 49**
**D-2000 Hamburg 1(DE)**

(54) **Verfahren zur Herstellung von Glaskörpern mit Bereichen unterschiedlicher optischer Brechung.**

(57) Verfahren zur Herstellung von Glaskörpern mit Bereichen unterschiedlicher optischer Brechung, bestehend aus einem Basiskörper (1) und einer auf den Basiskörper aufgesinterten, den Basiskörper zumindest teilweise bedeckenden Deckschicht (2) aus einem Glas, das infolge Dotierung einen anderen Brechungsindex aufweist als das Glas des Basiskörpers, wobei das Ausgangsmaterial ·zur Herstellung des Mantels auf Basis von pulverkeramischem Material zu einem freitragenden, ungesinterten, porösen Grünkörper verformt, getrocknet und einem Reinigungsschritt in einer erhitzten Gasphase unterzogen wird, wonach die zum Basiskörper fixierte Deckschicht in einem anschließenden kombinierten Dotier-/Sinterprozeß in einer den Dotierstoff enthaltenden Gasphase bei einer Temperatur im Bereich von 1150 bis 1500 °C als Glas erschmolzen und auf den Basiskörper aufgesintert wird.

## Verfahren zur Herstellung von Glaskörpern mit Bereichen unterschiedlicher optischer Brechung

Die Erfindung betrifft ein Verfahren zur Herstellung von Glaskörpern mit Bereichen unterschiedlicher optischer Brechung, bestehend aus einem Basiskörper und einer auf den Basiskörper aufgesinterten, den Basiskörper zumindest teilweise bedeckenden Deckschicht aus einem Glas, das infolge Dotierung einen anderen Brechungsindex aufweist als das Glas des Basiskörpers.

Die Erfindung betrifft insbesondere ein Verfahren, gemäß welchem der gesinterte aus Basiskörper und Deckschicht bestehende Glaskörper als Vorform mit Kern- und Mantelglas zur Herstellung eines optischen Wellenleiters weiterverarbeitet wird. Es ist jedoch möglich, den nach dem erfindungsgemäßen Verfahren hergestellten Glaskörper ganz allgemein für die Herstellung optischer Systeme einzusetzen, bei denen Glaskörper mit Bereichen unterschiedlichen optischen Brechungsverhaltens benötigt werden, wie z.B. Linsensysteme. In diesem Fall ist es nicht erforderlich, daß die Deckschicht den Basiskörper als Mantel umschließt, sondern sie muß ihn nur über einen Hauptbereich seiner Oberfläche unter Ausbildung einer scharf definierten Grenzfläche zwischen den beiden Gläsern unterschiedlichen Brechungsverhaltens (Basiskörper und Deckschicht) bedecken. Beispielsweise kann der Glaskörper quaderförmig ausgebildet sein und er kann einer mechanischen Weiterbearbeitung unterzogen werden.

Aus der europäischen Patentanmeldung 182 250 ist bekannt, daß durch konzentrisches Zusammenfügen von einem Glasstab und einem Mantelglasrohr eine Vorform für die Herstellung einer Lichtleitfaser (rod-in-tube-Technik) angefertigt werden kann. Nachteilig ist bei diesem Verfahren, daß zunächst zwei Formkörper aus Glas hergestellt und anschließend die Grenzflächen zwischen den Teilen sehr aufwendig gereinigt werden müssen, bevor diese beiden Teile zusammengesintert werden. Ein weiterer Nachteil ist bei diesem Verfahren, daß das Zusammensintern der beiden Teile bei relativ hohen Temperaturen (> 2000 °C) erfolgen muß; hierdurch können sich unerwünschte Änderungen in der Geometrie des Systems ergeben, d.h., Kernglas und Mantelglas fließen bereits, so daß die Grenze zwischen diesen Gläsern nicht mehr scharf definiert ist.

Aus der europäischen Patentanmeldung 228 082 ist bekannt, einen Brechungsindexgradienten im Kern- und Mantelbereich eines offenporigen Grünkörpers durch eine Steuerung des Fluorpartialdruckes während der Sinterung zu erreichen. Nachteilig ist bei diesem Verfahren, daß keine scharfen Grenzen zwischen den unterschiedlichen Brechungsindexbereichen erzielt werden können.

In dieser Patentanmeldung wird auch auf andere Verfahren verwiesen, unterschiedliche Brechungsindices durch einen Gradienten der Gründichte, der Teilchendurchmesser oder des Sinterverhaltens (Änderung der Viskosität durch Kodotierung im Kernbereich) herzustellen. Für diese Verfahren gelten die gleichen Einschränkungen, daß keine scharfen Grenzen zwischen den unterschiedlichen Brechungsindexbereichen erreicht werden können.

Aus der europäischen Patentanmeldung 249 230 ist ein Verfahren bekannt, bei dem von zwei unterschiedlich dotierten, über einen VAD-Prozeß (Vapour axial deposition) hergestellten und zu kompaktem Glas gesinterten Stäben ein Stab mit einem Ultraschallbohrer zu einem Rohr aufgebohrt und dann der zweite Stab elongiert und anschließend in das Rohr eingeschoben wird, wonach dieses System zusammengesintert wird.

Nachteilig ist bei diesem Verfahren, daß die mechanische Nachbearbeitung eines gesinterten Glases sehr aufwendig ist und fehlerfreie Grenzflächen zwischen Stab und Rohr nicht mit Sicherheit zu gewährleisten sind.

Der Erfindung liegt die Aufgabe zugrunde, ein Verfahren anzugeben, mit dem ein Glaskörper mit exakt definierten Bereichen unterschiedlichen optischen Brechungsverhaltens mit wenigen einfachen Verfahrensschritten hergestellt werden kann, der insgesamt und besonders im Grenzbereich der Gläser unterschiedlicher Brechungsindices nur sehr geringe, im ppb-Bereich liegende Konzentrationen von unerwünschten Verunreinigungen aufweist und der blasen- und schlierenfrei herstellbar ist.

Diese Aufgabe wird erfindungsgemäß dadurch gelöst, daß das Ausgangsmaterial zur Herstellung der Deckschicht auf Basis von pulverkeramischem Material zu einem freitragenden, ungesinterten, porösen Grünkörper verformt, getrocknet und einem Reinigungsprozeß in einer erhitzten Gasphase unterzogen wird, wonach die zum Basiskörper fixierte Deckschicht in einem anschließenden kombinierten Dotier-/Sinterprozeß in einer den Dotierstoff enthaltenden Gasphase bei einer Temperatur im Bereich von 1150 bis 1500 °C als Glas erschmolzen und auf den Basiskörper aufgesintert wird.

Nach vorteilhaften Weiterbildungen des Verfahrens gemäß der Erfindung werden als Basiskörper ein zylindrischer Glasstab und als Deckschicht ein Hohlzylinder eingesetzt, wobei der den Basiskörper bildende zylindrische Glasstab in den die Deckschicht bildenden hohlzylindrischen Grünkörper eingeschoben und Basiskörper und Deckschicht an einem Ende konzentrisch zueinander fixiert werden, bevor der Dotier-/Sinterprozeß ausgeführt wird. Ein solcher Glaskörper kann als Vorform für optische Wellenleiter eingesetzt werden.

Nach weiteren vorteilhaften Ausgestaltungen des erfindungsgemäßen Verfahrens wird der die Deckschicht bildende Grünkörper über eine Dauer von 2 h bei einer Temperatur von etwa 400 °C in einer Sauerstoff und 10 Vol.% Thionylchlorid $SOC_2$ und anschließend über eine Dauer von 4 h bei einer Temperatur von etwa 1100 °C in einer Sauerstoff und 10 Vol.% Chlorgas $Cl_2$ enthaltenden Atmosphäre gereinigt, wobei der Reinigungsschritt vor dem Sinterprozeß mit dem System aus Basiskörper und die Deckschicht bildendem Grünkörper wiederholt werden kann.

Dies hat besondere Vorteile zur Herstellung hochreiner Glaskörper, z.B. dann, wenn ein noch nicht vollständig dicht gesinterter Basiskörper eingesetzt wird, wie er z.B. erhalten wird, wenn der Basiskörper aus einer durch Abscheidung aus einer siliciumhaltigen Gasphase mittels Plasma activated chemical vapour deposition (PCVD) oder Modifid chemical vapour deposition (MCVD) hergestellten Vorform hergestellt wird.

Es ist in diesem Fall beachtlich, daß ein Material für den Basiskörper eingesetzt wird, das eine gegenüber dem Material für die Deckschicht deutlich geringere Schwindung aufweist.

Nach einer weiteren vorteilhaften Ausgestaltung des Verfahrens, gemäß der Erfindung wird der Dotier-/Sinterprozeß in einer Gasatmosphäre durchgeführt, die als Dotierstoff ein fluorhaltiges Gas in einer Menge von 10 bis 100 Vol.%, ein Inertgas in einer Menge von 0 bis 90 Vol.% und Chlorgas $Cl_2$ in einer Menge von 0 bis 5 Vol.% enthält, wobei als Dotierstoff $C_2F_6$, $SF_6$, $SO_2F_2$, $CF_4$ und/oder $NF_3$ eingesetzt wird.

Vorteilhafterweise wird der Dotier-/Sinterprozeß in einer Gasatmosphäre durchgeführt, die 50 Vol.% $CF_4$, 1 Vol.% Chlorgas $Cl_2$ und als Rest Helium enthält.

Mit einem derartigen Dotierprozeß wird ein Glas erhalten, das einen gegenüber einem undotierten Quarzglas niedrigeren Brechungsindex aufweist. Ein niedrigerer Brechungsindex kann auch über eine Dotierung mit einem borhaltigen Dotierstoff eingestellt werden. Wird beispielsweise ein germanium- oder aluminiumhaltiger Dotierstoff eingesetzt, kann ein gegenüber einem undotierten Quarzglas erhöhter Brechungsindex eingestellt werden.

Insbesondere, wenn eine relativ hohe Fluordotierung erwünscht ist, kann dies nur noch über eine Dotierung aus der Gasphase erreicht werden und mit porösen, noch ungesinterten Grünkörpern werden für einen solchen Dotierprozeß die geeigneten Voraussetzungen geschaffen. Insbesondere, wenn als Dotierstoff $CF_4$ eingesetzt wird, werden gute Ergebnisse erhalten, weil keine flüchtigen Silicium-Fluor-Verbindungen auftreten, es geschieht also nahezu keine Anätzung des zu dotierenden siliciumhaltigen Grünkörpers (es wurden Gewichtsverluste an Si ≤ 0,5 Gew.% gemessen). Eine Fluordotierung senkt nicht nur den Brechungsindex eines Quarzglases sondern auch die Viskosität. Außerdem wird der thermische lineare Ausdehnungskoeffizient geringer, was zu einer geringen Druckspannung im Mantelbereich führt, wenn ein undotierter Basiskörper mit einer mit Fluor dotierten Deckschicht ummantelt ist. Für die Herstellung von optischen Wellenleitern in Faserform hat dies den Vorteil, daß sich eine erhöhte Faserfestigkeit ergibt. Darüberhinaus verhindert eine Fluordotierung auch das Eindringen von OH-Ionen, die Langzeitwasserbeständigkeit von derartigen optischen Wellenleitern wird also verbessert.

Nach einer vorteilhaften Weiterbildung des Verfahrens nach der Erfindung wird der Sinterprozeß bei einer Temperatur im Bereich von 1300 bis 135u 0C durchgeführt.

Dies wird durch eine Dotierung des Materials für die Deckschicht mit Fluor während der Sinterung erreicht. Schon eine Fluordotierung von 0,2 Mol % bewirkt eine Absenkung der Sintertemperatur von Quarzglas auf 1450 °C bei einer Absenkgeschwindigkeit v des zu sinternden Körpers von v = 10 mm/min in den Sinterofen. Mit einer Fluordotierung von 1 Mol % können Sintertemperaturen im Bereich von 1300 °C bis 1350 °C erreicht werden.

Nach einer weiteren vorteilhaften Ausgestaltung des erfindungsgemäßen Verfahrens wird der Basiskörper und der die Deckschicht bildende Grünkörper, zumindest aber der die Deckschicht bildende Grünkörper, aus einer eine Dispergierflüssigkeit und als Feststoff $SiO_2$-Partikel eines Durchmessers im Bereich von 10 bis 500 nm, vorzugsweise eines Bereiches von 10 bis 100 nm, und eines mittleren Teilchendurchmessers von 40 nm enthaltenden Suspension hergestellt.

Vorzugsweise werden eine Suspension mit einem Feststoff: Dispergierflüssigkeit-Gewichtsverhältnis von 0,5:1 bis 1,25:1 und als Dispergierflüssigkeit Wasser eingesetzt.

Wird als Ausgangsmaterial für die Herstellung der Deckschicht pulverkeramisches Material eingesetzt, wie es beim Aufbau einer Suspension der Fall ist, kann eine relativ hohe Gründichte des aus der Suspension hergestellten Grünkörpers erreicht werden, was eine relativ kleine Schwindung und damit geringe Rißgefahr beim Sintern zur Folge hat. Aus Suspensionen hergestellte Grünkörper weisen relative Gründichten von größer als 35 % auf. Dies führt zu einer linearen Schwindung bei der Sinterung von maximal 30 %, so daß die Gefahr der Rißbildung, und dies betrifft vor allem Formkörper mit größeren Wandstärken, sehr gering ist. Werden z.B. für die Herstellung des Glaskörpers ein zylindrischer Glasstab als Basiskörper und ein den Glasstab umschließender hohlzylindrischer Grünkörper als Deckschicht eingesetzt, muß die Differenz zwischen dem Innendurchmesser des Deckschichtrohres und dem Außendurchmesser des Basiskörperstabes (bezogen auf den dichtgesinterten Glasstab) geringer sein als die Schwindung des Deckschichtrohres bei der Sinterung.

Nach vorteilhaften Weiterbildungen des Verfahrens gemäß der Erfindung wird der Suspension ein ionogener Zusatzstoff zugefügt, der den pH-Wert der Suspension in Richtung auf den basischen Bereich (pH $\geq$ 5 und $\leq$ 8) verschiebt, wobei als ionogener Zusatzstoff eine wässerige 5%ige $NH_4F$-Lösung vorzugsweise in einer Menge von 0,1 bis 5 Gew.%, bezogen auf den Feststoffanteil der Suspension, zugegeben wird.
Hiermit ist der Vorteil verbunden, daß der als Vernetzungsaktivator wirkende ionogene Zusatzstoff in einer solchen Menge vorliegt, daß gerade die Oberfläche der Feststoffpartikel in der Suspenion mit Ionen des ionogenen Zusatzstoffes bedeckt ist. Die Menge des zugesetzten ionogenen Zusatzstoffes sollte nicht größer als 5 Gew.%, bezogen auf den Feststoffanteil der Suspension, sein, da sich sonst die Viskosität der Suspension so stark erhöht, daß eine effiziente Homogenisierung schwierig wird.

Nach vorteilhaften Weiterbildungen des Verfahrens gemäß der Erfindung wird der Reinigungsprozeß in einer Atmosphäre aus Sauerstoff oder aus Inertgas mit einem Zusatz von 1 bis 10 Vol.% eines chlorhaltigen Gases bei einer Temperatur im Bereich von 400 °C bis 1100 °C über eine Dauer von bis zu 8 h durchgeführt, wobei als Inertgas vorzugsweise Helium und als chlorhaltiges Gas vorzugsweise Chlorgas $Cl_2$ oder Thionylchlorid $SOCl_2$ eingesetzt wird.
Für die Herstellung von in der Optik einzusetzenden Glaskörpern sind Quarzgläser erforderlich, die praktisch keine Verunreinigungen aufweisen dürfen und die insbesondere nahezu wasserfrei sein müssen. Die Herstellung derartig reiner Gläser über den konventionellen Weg der Herstellung aus einer Glasschmelze stößt auf Grenzen, da hier insbesondere die Verunreinigung durch in der Glasmatrix enthaltenes Wasser zu groß ist. Aus diesem Grund ist es vorteilhaft, diese hochreinen Gläser durch Sinterung von porösen Grünkörpern aus feinstteiligen Quarzglaspartikeln mit einer Teilchengröße im Bereich von 1 bis 500 nm herzustellen. Die Grünkörper können, da sie porös und damit gasdurchlässig sind, nach Trocknung einem Reinigungsschritt in einer erhitzten, mit den vorhandenen Verunreinigungen reagierenden Gasatmosphäre unterzogen werden und werden im gereinigten Zustand anschließend bei den entsprechenden Temperaturen zu transparentem Glas gesintert. Störende Verunreinigungen sind außer OH-Ionen auch Ionen und Partikel der Übergangsmetalle.

Ein Verfahren zur Reinigung von porösen Grünkörpern, die zur Herstellung von optischen Wellenleitern benutzt werden können, ist z.B. aus der deutschen Patentanmeldung P 35 11 439.8 bekannt.

Mit der vorliegenden Erfindung ist insbesondere der Vorteil verbunden, daß hochreine Glaskörper mit scharf definierten Grenzflächen zwischen Gläsern unterschiedlichen optischen Brechungsverhaltens hergestellt werden können. Wenn Glaskörper in rod-in-tube-Technik hergestellt werden sollen, ergibt sich der besondere Vorteil, daß nicht zunächst zwei getrennte, bereits gesinterte Glaskörper (Kern und Mantel) hergestellt werden müssen, die dann in einem weiteren Schmelz-/Kollabierprozeß miteinander verbunden werden müssen, was einmal hohe Temperaturen im Bereich von über 2000 °C erfordert und infolge des Fließens des Glases bei diesen Temperaturen zu nicht mehr scharf definierten Grenzen zwischen den Gläsern unterschiedlichen optischen Brechungsverhaltens führt und zum anderen immer die Gefahr des Einschleppens von unerwünschten, während des Zusammenschmelzens nicht mehr entfernbaren Verunreinigungen an den Grenzflächen der beiden Glaskörper in sich birgt.

Sowohl die Reinigung als auch die Sinterung, zumindest aber die Sinterung von pulverkeramisch hergestellten Deckschichten und der Sinterprozeß zur Verbindung von Basiskörper- und Deckschichtmaterial wird nach dem vorliegenden Verfahren zu einem einzigen Prozeßschritt zusammengefaßt. Ein weiterer Vorteil ist, daß eine gesonderte aufwendige und nicht immer absolut vollständige Reinigung der Grenzflächen vor dem Zusammensintern von Basiskörper und Deckschicht entfallen kann.

Die pulverkeramische Formgebung des Deckschichtmaterials (ausgehend von Suspensionen) ermöglicht hohe Gründichten bis zu etwa 50%, die kleine Schwindungen und damit eine verminderte Rißgefahr beim Sintern zur Folge haben. Ein weiterer Vorteil ist, daß das pulverkeramische Deckschichtmaterial zum Zeitpunkt seiner Dotierung noch voll ständig ohne bereits ausgebildete Glasphase vorliegt, so daß gasförmiger Dotierstoff über eine relativ große Oberfläche mit dem Deckschichtmaterial in Kontakt gelangen kann und auf diese Weise homogen über die sich bildende Glasphase verteilt wird.

Die pulverkeramische Formgebung kann nach sehr einfachen Verfahren erfolgen, wie sie z.B. aus den deutschen Patentanmeldungen P 35 11 453.3 oder P 35 11 450.9 bekannt sind.

Insbesondere für die Herstellung von optischen Wellenleitern bieten sich besondere Vorteile: Es können sowohl große Vorformen für optische Wellenleiter durch Kombination eines mittels PCVD hergestellten, mit einem Brechungsindexprofil versehenen Kernes mit einem dickwandigen Mantelrohr (Hybridtechnologie) als auch Vorformen für optische Wellenleiter aus ausschließlich pulverkeramisch hergestellten Glaskörpern mit einem undotierten Kernglas und einem zur Änderung des Brechungsindex dotierten Mantelglas kostengünstig hergestellt werden.

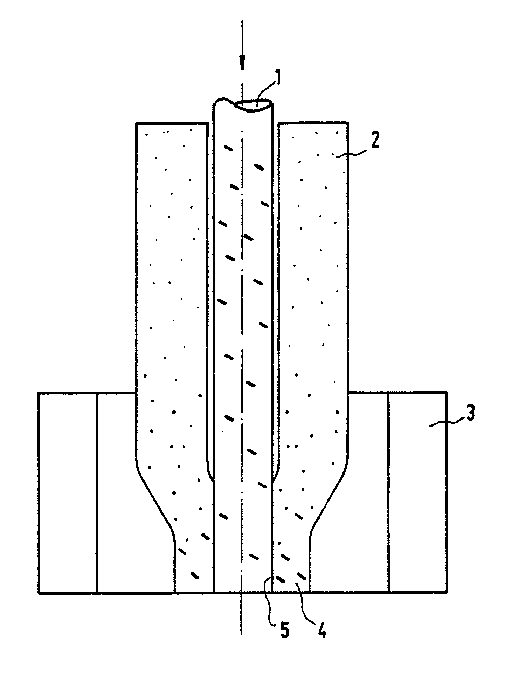

Anhand der Zeichnung wird ein Ausführungsbeispiel der Erfindung beschrieben und in ihrer Wirkungsweise erläutert.

Die Figur zeigt die schematische Darstellung eines nach der Erfindung herzustellenden Glaskörpers im Schnitt während des Sinterprozesses zur Verbindung des Basiskörpers und der Deckschicht.

Ein bereits gesinterter zylinderförmiger Glasstab als Basiskörper 1 ist konzentrisch von einer hohlzylindrischen Deckschicht 2 umgeben, die als poröser Grünkörper vorliegt, also noch nicht gesintert ist. Die Deckschicht 2 sintert beim Durchlaufen eines Sinterofens 3 in Pfeilrichtung in einer Atmosphäre aus Helium, Chlorgas $Cl_2$ und mindestens einem fluorhaltigen Gas, wie z.B. $CF_4$, rißfrei auf den Basiskörper 1 auf. Es entsteht dabei ein Verbundglaskörper 4, der eine scharf definierte Grenzfläche 5 zwischen dem Basiskörper 1 und der Deckschicht 2 aufweist, die aus Gläsern mit unterschiedlichen optischen Eigenschaften bestehen. Diese Grenzfläche 5 weist keine Störungen wie Blasen oder Kontaminationen auf.

Der Basiskörper 1 kann aus einer durch Abscheidung aus einer siliciumhaltigen Gasphase mittels Plasma activated chemical vapour deposition (PCVD) oder Modifid chemical vapour deposition (MCVD) hergestellten und anschließend kollabierten Vorform hergestellt sein.

Er kann jedoch auch auf pulverkeramischem Weg aus einer Suspension hergestellt, als Grünkörper getrocknet, gereinigt und anschließend gesintert werden, analog zu dem Verfahren, wie es nachstehend beschrieben wird. Unabhängig davon, nach welchem Verfahren der Basiskörper hergestellt wird, ist wichtig, daß er eine sehr glatte, d.h. wellenfreie Oberfläche aufweist.

Aus einer vernetzten wässerigen Suspension, bestehend aus 50 Gew.% einer pyrogenen Kieselsäure mit Partikeln einer mittleren Partikelgröße von 40 nm und einer Partikelgrößenverteilung im Bereich von 10 bis 100 nm und einem ionogenen Zusatzstoff in Form von 1,5 Gew.% $NH_4F$, bezogen auf den Feststoffanteil der Suspension, wird mittels einer Form ein stabförmiger Grünkörper hergestellt, der nach Entformen und Trocknen über eine Dauer von 2 h bei einer Temperatur von etwa 400 °C in einer Sauerstoff und 10 Vol.% Thionylchlorid $SOCl_2$ enthaltenden Atmosphäre und über eine Dauer von 4 h bei einer Temperatur von etwa 1100 °C in einer Sauerstoff und 10 Vol.% Chlorgas $Cl_2$ enthaltenden Atmosphäre gereinigt wird.

Nach Sinterung dieses stabförmigen Grünkörpers bei einer Temperatur von etwa 1500 °C in einer Helium und 1 Vol.% Chlorgas $Cl_2$ enthaltenden Atmosphäre wurde ein blasen- und schlierenfreier Glasstab - für das vorliegende Beispiel einer Länge von 300 mm und eines Durchmessers von 8 mm -hergestellt. Die Sinterung erfolgt durch Absenken des grünen Stabes in den Sinterofen mit einer Geschwindigkeit v = 10 mm/min.

Die Deckschicht 2 wird bis auf den Sinterschritt nach dem gleichen Verfahren wie oben beschrieben hergestellt, hier wird jedoch eine Form mit Innenkern eingesetzt, um einen Hohlzylinder zu erhalten; die für das hier beschriebene Beispiel eingesetzte Form hatte einen Innendurchmesser von 30 mm, der Innenkern hatte einen Durchmesser von 10 mm. Nach wie oben beschriebener Entformung, Trocknung und Reinigung wurde ein Grünkörper als Deckschicht 2 erhalten, der einen Außendurchmesser von 27,3 mm, einen Innendurchmesser von 9,1 mm und eine Länge von 300 mm hatte.

In einer Flamme werden der Basiskörper 1 in Form des Glasstabes und die Deckschicht 2 in Form des hohlzylindrischen Grünkörpers vorsichtig zentrisch zueinander durch örtliches Aufschmelzen fixiert und, mit diesem fixierten Ende beginnend, durch den Zonensinterofen 3 mit einer Absenkgeschwindigkeit von v = 10 mm/min geführt. Als Sinteratmosphäre wurde Helium mit einem Zusatz von 50 Vol.% $CF_4$ und 1 Vol.% $Cl_2$ eingesetzt. Die maximale Sintertemperatur betrug 1350 °C. Die Fluordotierung im gesinterten Glas der Deckschicht 2 betrug 1 Gew.%. Die Deckschicht 2 sinterte riß- und blasenfrei auf den Basiskörper 1 auf. Die Brechungsindices $n_D$ betrugen für das Glas des Basiskörpers 1 $n_D$ = 1,4580 und für das Glas der Deckschicht 2 $n_D$ = 1,4530. Die Grenzfläche 5 zwischen beiden Gläsern war exakt scharf definiert.

Im Glas des Basiskörpers 1 wurde eine Konzentration von OH-Ionen von weniger als 11 ppb und eine Konzentration von Fe,Cr und Ni von weniger als 3 ppb (Nachweisgrenze) gemessen.

Es ist im Rahmen des vorliegenden Verfahrens auch möglich, nicht nur zwei Gläser unterschiedlichen Brechungsverhaltens mit scharf definierter Grenzfläche miteinander zu verbinden, sondern es können durch wiederholte Anwendung des vorliegenden Verfahrens auch vielschichtige Strukturen aus Gläsern unterschiedlichen optischen Verhaltens hergestellt werden.

## Ansprüche

1. Verfahren zur Herstellung von Glaskörpern mit Bereichen unterschiedlicher optischer Brechung, bestehend aus einem Basiskörper und einer auf den Basiskörper aufgesinterten, den Basiskörper zumindest teilweise bedeckenden Deckschicht aus einem Glas, das infolge Dotierung einen anderen Brechungsindex aufweist als das Glas des Basiskörpers,
dadurch gekennzeichnet,
daß das Ausgangsmaterial zur Herstellung der Deckschicht auf Basis von pulverkeramischem Material zu einem freitragenden, ungesinterten, porösen Grünkörper verformt, getrocknet und einem Reinigungsprozeß in einer erhitzten Gasphase unterzogen wird, wonach die zum Basiskörper fixierte Deckschicht in einem anschließenden kombinierten Dotier-/Sinterprozeß in einer den Dotierstoff enthaltenden Gasphase bei einer Temperatur im Bereich von 1150 bis 1500 °C als Glas erschmolzen und auf den Basiskörper aufgesintert wird.

2. Verfahren nach Anspruch 1,
dadurch gekennzeichnet,
daß als Basiskörper ein gesinterter Glasstab und als Deckschicht ein den Basiskörper umschließender Hohlkörper eingesetzt werden.

3. Verfahren nach Anspruch 2,
dadurch gekennzeichnet,
daß als Basiskörper ein zylindrischer Glasstab und als Deckschicht ein Hohlzylinder eingesetzt werden.

4. Verfahren nach Anspruch 1,
dadurch gekennzeichnet,
daß als Basiskörper ein planarer gesinterter Glasblock und als Deckschicht ein den Basiskörper an einer seiner Hauptflächen bedeckender planarer ungesinterter Grünkörper eingesetzt werden.

5. Verfahren nach Anspruch 3,
dadurch gekennzeichnet,
daß der den Basiskörper bildende zylindrische Glasstab in den die Deckschicht bildenden hohlzylindrischen Grünkörper eingeschoben und Basiskörper und Deckschicht an einem Ende konzentrisch zueinander fixiert werden, bevor der Dotier-/Sinterprozeß ausgeführt wird.

6. Verfahren nach mindestens einem der Ansprüche 1 bis 5,
dadurch gekennzeichnet,
daß der Reinigungsprozeß in einer Atmosphäre aus Sauerstoff oder aus Inertgas mit einem Zusatz von 1 bis 10 Vol.% eines chlorhaltigen Gases bei einer Temperatur im Bereich von 400 °C bis 1100 °C über eine Dauer von bis zu 8 h durchgeführt wird.

7. Verfahren nach Anspruch 6,
dadurch gekennzeichnet,
daß als Inertgas Helium eingesetzt wird.

8. Verfahren nach Anspruch 6,
dadurch gekennzeichnet,
daß als chlorhaltiges Gas Chlorgas $Cl_2$ eingesetzt wird.

9. Verfahren nach Anspruch 6,

dadurch gekennzeichnet,
daß als chlorhaltiges Gas Thionylchlorid $SOCl_2$ eingesetzt wird.

10. Verfahren nach mindestens einem der Ansprüche 1 bis 9,
dadurch gekennzeichnet,
daß der die Deckschicht bildende Grünkörper über eine Dauer von 2 h bei einer Temperatur von etwa 400 °C in einer Sauerstoff und 10 Vol.% Thionylchlorid $SOCl_2$ und anschließend über eine Dauer von 4 h bei einer Temperatur von etwa 1100 °C in einer Sauerstoff und 10 Vol.% Chlorgas $Cl_2$ enthaltenden Atmosphäre gereinigt wird.

11. Verfahren nach mindestens einem der Ansprüche 1 bis 10,
dadurch gekennzeichnet,
daß der Reinigungsprozeß vor dem Sinterprozeß mit dem System aus Basiskörper und die Deckschicht bildenden Grünkörper wiederholt wird.

12. Verfahren nach mindestens einem der Ansprüche 1 bis 11,
dadurch gekennzeichnet,
daß der Dotier-/Sinterprozeß in einer Gasatmosphäre durchgeführt wird, die als Dotierstoff ein fluorhaltiges Gas in einer Menge von 10 bis 100 Vol.%, ein Inertgas in einer Menge von 0 bis 90 Vol.% und Chlorgas $Cl_2$ in einer Menge von 0 bis 5 Vol.% enthält.

13. Verfahren nach Anspruch 12,
dadurch gekennzeichnet,
daß als Dotierstoff $C_2F_6$, $SF_6$, $SO_2F_2$, $CF_4$ und/oder $NF_3$ eingesetzt wird.

14. Verfahren nach Anspruch 13,
dadurch gekennzeichnet,
daß der Dotier-/Sinterprozeß in einer Gasatmosphäre durchgeführt wird, die 50 Vol.% $CF_4$, 1 Vol.% Chlorgas $Cl_2$ und als Rest Helium enthält.

15. Verfahren nach mindestens einem der Ansprüche 1 bis 14,
dadurch gekennzeichnet,
daß der Sinterprozeß bei einer Temperatur im Bereich von 1300 bis 1350 °C durchgeführt wird.

16. Verfahren nach mindestens einem der Ansprüche 1 bis 15,
dadurch gekennzeichnet,
daß der Basiskörper und der die Deckschicht bildende Grünkörper, zumindest aber der die Deckschicht bildende Grünkörper, aus einer eine Dispergierflüssigkeit und als Feststoff $SiO_2$-Partikel eines Durchmessers im Bereich von 10 bis 500 nm, vorzugsweise eines Bereiches von 10 bis 100 nm, und eines mittleren Teilchendurchmessers von 40 nm enthaltenden Suspension hergestellt wird.

17. Verfahren nach Anspruch 16,
dadurch gekennzeichnet,
daß eine Suspension mit einem Feststoff:Dispergierflüssigkeit-Gewichtsverhältnis von 0,5:1 bis 1,25:1 eingesetzt wird.

18. Verfahren nach Anspruch 17,
dadurch gekennzeichnet, daß als Dispergierflüssigkeit Wasser eingesetzt wird.

19. Verfahren nach den Ansprüchen 16 bis 18,
dadurch gekennzeichnet,
daß der Suspension ein ionogener Zusatzstoff zugefügt wird, der den pH-Wert der Suspension in Richtung auf den basischen Bereich (pH $\geq$ 5 und $\leq$ 8) verschiebt.

20. Verfahren nach Anspruch 19,
dadurch gekennzeichnet,
daß als ionogener Zusatzstoff eine Ammoniumverbindung eingesetzt wird.

21. Verfahren nach Anspruch 20,
dadurch gekennzeichnet,
daß als ionogener Zusatzstoff eine wässerige 5%ige $NH_4F$-Lösung eingesetzt wird.

22. Verfahren nach den Ansprüchen 19 bis 21,
dadurch gekennzeichnet,
daß der ionogene Zusatzstoff in einer Menge von 0,1 bis 5 Gew.%, bezogen auf den Feststoffanteil der Suspension, zugegeben wird.

23. Verfahren nach den Ansprüchen 16 bis 22,
dadurch gekennzeichnet,
daß eine wässerige Suspension eingesetzt wird, die $SiO_2$-Partikel eines mittleren Teilchendurchmessers von 40 nm bei einem Feststoff:Wasser-Gewichtsverhältnis von 0,9:1 bis 1,2:1 enthält und der eine 5%ige wässerige $NH_4F$-Lösung in einer Menge von 0,75 bis 1,5 Gew.%, bezogen auf den Feststoffanteil der Suspension, zugesetzt ist.

24. Verfahren nach mindestens einem der Ansprüche 1 bis 23,
dadurch gekennzeichnet,
daß der Basiskörper dadurch hergestellt wird, daß die Suspension in eine Form gegossen, nach Entformen und Trocknen zunächst über eine Dauer von 2 h bei einer emperatur von etwa 400 °C in einer Sauerstoff und 10 Vol.% eines chlorhaltigen Gases enthaltenden und danach über eine Dauer von 4 h bei einer Temperatur von etwa 1100 °C in einer Sauerstoff und 10 Vol.% eines chlorhaltigen Gases enthaltenden Atmosphäre gereinigt und anschließend in einer 1 Vol.% eines chlorhaltigen Gases enthaltenden Inertgasatmosphäre bei einer Temperatur von etwa 1500 °C gesintert wird.

25. Verfahren nach Anspruch 24,
dadurch gekennzeichnet,
daß als chlorhaltiges Gas Chlorgas $Cl_2$ oder Thionylchlorid $SOCl_2$ eingesetzt wird.

26. Verfahren nach Anspruch 24,
dadurch gekennzeichnet,
daß als Inertgas Helium eingesetzt wird.

27. Verfahren nach mindestens einem der Ansprüche 1 bis 23,
dadurch gekennzeichnet,
daß der Basiskörper aus einer durch Abscheidung aus einer siliciumhaltigen Gasphase mittels Plasma activated chemical vapour deposition (PCVD) oder Modified chemical vapour deposition (MCVD) hergestellten Vorform hergestellt wird.

28. Verfahren nach mindestens einem der Ansprüche 1 bis 27,
dadurch gekennzeichnet,
daß der Basiskörper und der die Deckschicht bildende Grünkörper durch örtliches Verschmelzen zueinander fixiert werden, bevor sie den Prozeßschritten unterzogen werden, die das System aus Basiskörper und die Deckschicht bildendem Grünkörper gemeinsam betreffen.

29. Verfahren nach mindestens einem der Ansprüche 1 bis 27,
dadurch gekennzeichnet,
daß der die Deckschicht bildende Grünkörper in Form eines Hohlkörpers auf dem Basiskörper in Form eines Glasstabes gehalten wird derart, daß dem Glasstab an einem seiner Enden eine tellerförmige Verdickung erteilt wird, auf der der Grünkörper nach Aufschieben auf den Glasstab aufsitzt und dort erforderlichenfalls zusätzlich fixiert wird, bevor das System aus Basiskörper und dem die Deckschicht bildenden Grünkörper den es gemeinsam betreffenden Prozeßschritten unterzogen wird.

30. Verfahren nach den Ansprüchen 1 bis 29,
dadurch gekennzeichnet,
daß der aus Basiskörper und Deckschicht bestehende gesinterte Glaskörper als Vorform zur Herstellung eines optischen Wellenleiters weiterverarbeitet wird.

31. Verfahren nach den Ansprüchen 1 bis 29,
dadurch gekennzeichnet,
daß der aus Basiskörper und Deckschicht bestehende gesinterte Glaskörper als Vorform zur Herstellung von optischen Linsen weiterverarbeitet wird.

32. Verfahren nach den Ansprüchen 1 bis 29,
dadurch gekennzeichnet,
daß der aus Basiskörper und Deckschicht bestehende gesinterte Glaskörper als Basiskörper zum Aufbringen mindestens einer weiteren Deckschicht, die andere optische Eigenschaften aufweist als die erste Deckschicht, weiterverarbeitet wird.